(19) Europäisches Patentamt
European Patent Office
Office européen des brevets

(11) EP 0 591 025 B1

(12) **FASCICULE DE BREVET EUROPEEN**

(45) Date de publication et mention de la délivrance du brevet:
**12.02.1997 Bulletin 1997/07**

(51) Int. Cl.[6]: **C08F 8/32**, C08F 8/14

(21) Numéro de dépôt: **93402257.5**

(22) Date de dépôt: **16.09.1993**

(54) **Procédé de préparation de copolymères glutarimides et composés intermédiaires utiles**

Verfahren zur Herstellung von Gluratimid-Copolymeren und Zwischenprodukte dafür

Process for the manufacture of glutarimide copolymers and intermediate compounds thereof

(84) Etats contractants désignés:
**AT BE CH DE DK ES FR GB GR IT LI LU NL PT SE**

(30) Priorité: **02.10.1992 FR 9211689**

(43) Date de publication de la demande:
**06.04.1994 Bulletin 1994/14**

(73) Titulaire: **ELF ATOCHEM S.A.**
**92800 Puteaux (FR)**

(72) Inventeurs:
- **Gaillard, Patrice**
  **F-62153 Souchez (FR)**
- **Heim, Philippe**
  **F-64000 Pau (FR)**
- **Nowe, Stéphane**
  **F-64000 Pau (FR)**
- **Hamoui, Bachar**
  **F-34000 Montpellier (FR)**
- **Legay, Richard**
  **F-34090 Montpellier (FR)**
- **Parisi, Jean-Pierre**
  **F-34090 Montpellier (FR)**
- **Boutevin, Bernard**
  **F-34090 Montpellier (FR)**

(74) Mandataire: **Luziau, Nelly**
**ELF ATOCHEM S.A.,**
**Département Propriété Industrielle,**
**4-8, Cours Michelet,**
**La Défense 10 - Cedex 42**
**92091 Paris-La-Défense (FR)**

(56) Documents cités:
**EP-A- 0 200 530** **FR-A- 2 393 818**
**US-A- 3 284 425**

- **CHEMICAL ABSTRACTS, vol. 113, no. 8, 20 Août 1990, Columbus, Ohio, US; abstract no. 60149s, OTANI, IKUJI 'HEAT-RESISTANT COPOLYMERS CONTAINING SIX-MEMBERED ACID ANHYDRIDE AND IMIDE UNITS' page 22 ; & JP-A-02 043 207 (ASAHI CHEMICAL INDUSTRY CO., LTD.) 13 Février 1990**
- **PATENT ABSTRACTS OF JAPAN vol. 10, no. 203 (C-360)(2259) 16 Juillet 1986 & JP-A-61 043 604 (ASAHI CHEM IND CO LTD) 3 Mars 1986**
- **PATENT ABSTRACTS OF JAPAN vol. 10, no. 203 (C-360)(2259) 16 Juillet 1986 & JP-A-61 043 604**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Rank Xerox (UK) Business Services
2.13.13/3.4

## Description

La présente invention a pour objet un nouveau procédé de préparation de copolymères (méth)acryliques glutarimides ainsi que des composés intermédiaires utiles dans ledit procédé.

Les résines (méth)acryliques sont dotées de nombreuses propriétés utiles, telles que transparence, résistance à l'environnement en particulier aux solvants, résistance à l'abrasion, rigidité et propriétés mécaniques, et autres. Ces propriétés les rendent appropriées pour des emplois dans les domaines de l'optique, en tant que matériaux pour circuit optique hautes performances, communication optique sur courtes distances, capteurs optiques, les domaines de pièces utilitaires, en tant que partie d'automobile, partie de décor, partie d'appareils électro-ménager, et autres. Malheureusement, ces polymères ont une température de distorsion à chaud qui est faible, ce qui limite leurs utilisations.

Il a donc été proposé un grand nombre de procédés destinés à augmenter la valeur de la température de transition vitreuse Tg et parmi ceux-ci, le procédé consistant à introduire des groupes imides dans le (co)polymère (méth)acrylique.

US-P-2 146 209 décrit un procédé d'imidification dans lequel on fait réagir un polymère d'acide (méth)acrylique ou un ester de celui-ci avec une amine primaire en présence ou non d'un solvant, à une température comprise entre 140 et 200°C.

EP-A-0 200 530 décrit et revendique un procédé comprenant deux étapes. La première étape comprend la polymérisation d'acide méthacrylique et/ou de méthacrylate de méthyle ; la seconde étape comprend l'ajout d'ammoniac ou d'une amine primaire au milieu réactionnel maintenu à température élevée (150-300°C) pour obtenir un polymère glutarimide.

En fait, dans tous les procédés connus actuellement, le réactif aminé est incorporé au cours de la réaction de modification. Le degré de salification des produits intermédiaires est mal contrôlé et ainsi les produits finaux ne présentent pas toujours des qualités constantes. De plus, il est difficile de modifier les conditions opératoires de tels procédés pour cibler tant la constitution des polymères finaux recherchés que leur température de transition vitreuse Tg.

La présente invention permet de pallier ces inconvénients de l'art antérieur et permet la production de copolymères (méth)acrylimides à taux variables et contrôlés en glutarimide, et possédant des températures de transition vitreuse déterminées.

Selon la présente invention, il est fait emploi de copolymères ester (méth)acrylique/acide (méth)acrylique dont les fonctions acides sont salifiées à une température proche de la température ambiante par des amines primaires (cyclo)aliphatiques ou aromatiques, puis qui sont chauffés à haute température sous pression. Contrairement aux procédés classiques, dans lesquels le réactif aminé est incorporé au cours de la réaction de modification, dans la présente invention, l'amine se trouve déjà fixée par liaison ionique sur le squelette carboné du polymère à modifier. Ceci permet de pouvoir contrôler aisément le degré de salification, et donc le degré de fonctions glurarimides finales, à partir du taux en acide du copolymère de départ.

Ainsi, la présente invention fournit un nouveau procédé de préparation de copolymères (méth)acryliques glutarimides de formule I :

(I) 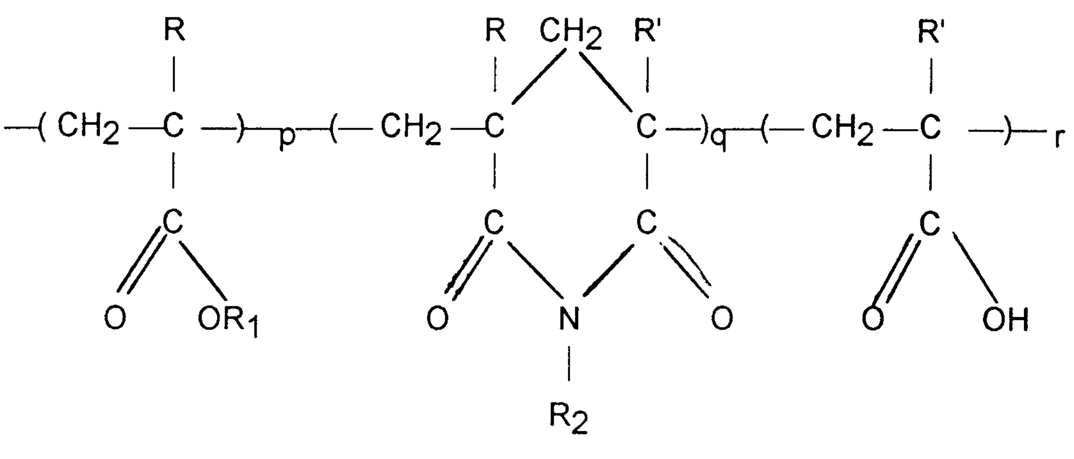

dans laquelle :

R et R', identiques ou différents, sont H ou $CH_3$ ;
$R_1$ est un groupe alkyle en $C_{1-8}$ ;
$R_2$ est H, un groupe alkyle en $C_{1-12}$, cycloalkyle en $C_{6-14}$, aryle en $C_{6-12}$ ;
p, q, r sont tels que $1 \le p \le 99$, $1 \le q \le 99$ et $0 \le r \le 30$ pour $p + q + r = 100$

caractérisé en ce qu'il comprend les étapes de :

a) polymérisation de monomères de formules respectives :

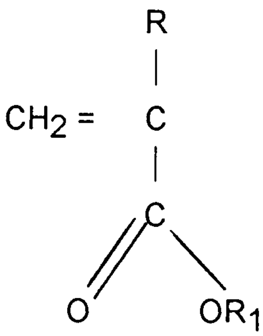 (IIa) et 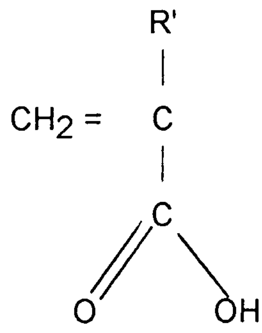 (IIb)

en un polymère de formule III :

(III) 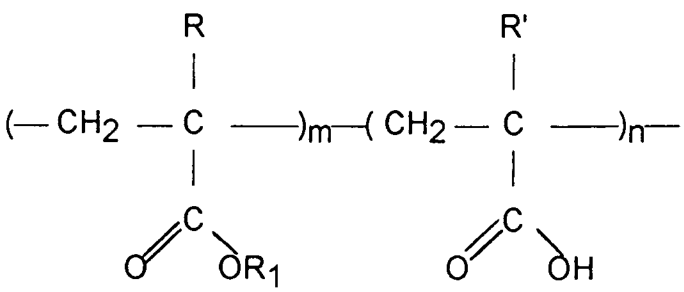

dans laquelle :

R, R' et $R_1$ ont les significations ci-dessus ;
m et n sont tels que :
$m + n = 1$ et $1/99 \leq m/n \leq 99$ ;
à une température comprise entre 30 et 140°C, pendant une période de 1 à 20 heures, jusqu'à un degré d'avancement de polymérisation d'au moins 90 %.

b) salification du polymère obtenu à l'étape précédente, avec au moins la quantité stoechiométrique d'une amine primaire de formule :

$$R_2 - NH_2$$

dans laquelle :

$R_2$ a la signification ci-dessus ;
en un polymère salifié de formule IV :

(IV) 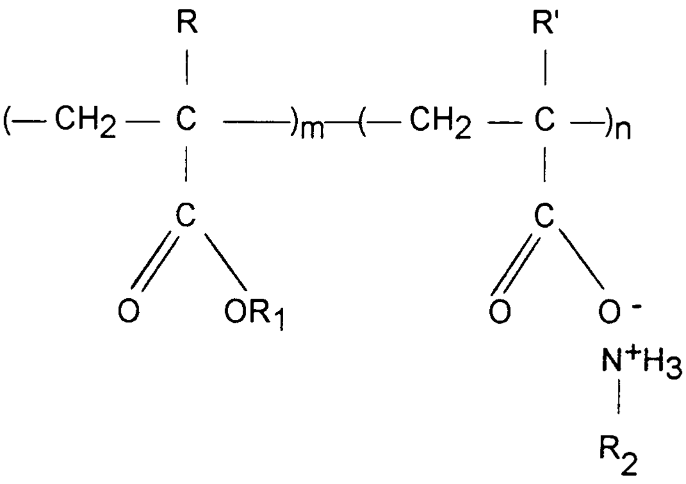

dans laquelle les symboles ont la même signification que ci-dessus ;

à une température comprise entre 0 et 40°C, pendant une période de 1 mn à 1 heure ;

c) imidification du polymère salifié obtenu à l'étape b) en le polymère de formule I précitée, à une température comprise entre 150 et 350°C, pendant une période de 1 mn à 5 heures, sous une pression comprise entre 1 et 100 atm.

La première étape consiste donc à introduire, dans un réacteur adéquat, un mélange de monomères constitué en moles de 1 à 99 % d'acide (méth)acrylique et de 99 à 1 % d'esters (méth)acryliques, puis à procéder à la polymérisation, jusqu'à un degré de polymérisation d'au moins 90 %.

Les monomères esters (méth)acryliques utilisés sont les esters alkylés d'acide (méth)acrylique dans lesquels le groupe alkyle contient de 1 à 8 atomes de carbone et préférentiellement 1 à 4 atomes de carbone. Les exemples d'esters pouvant être employés sont : le (méth)acrylate de méthyle, le (méth)acrylate d'éthyle, les (méth)acrylates de n-propyle, d'isopropyle, les (méth)acrylates de n-butyle, de sec-butyle et de tert-butyle.

Les copolymères (méth)acryliques peuvent en outre contenir d'autres monomères contenant une insaturation simple, du type éthylénique. Des exemples de tels monomères sont : le styrène, l'$\alpha$-méthylstyrène, le (méth)acrylonitrile, les (méth)acrylamides. Conviennent également comme autres monomères les monomères à insaturation double, tels que le butadiène. Toutefois, ces monomères ne doivent pas dépasser le taux de 50 % en poids, préférentiellement 20 % en poids dans le copolymère synthétisé.

La polymérisation est conduite dans les conditions de réaction énumérées ci-avant. De préférence, la polymérisation est effectuée sous la pression atmosphérique. De préférence, la température est comprise entre 30 et 70°C, et le temps de réaction est compris entre 1 et 10 heures. De préférence, le rapport m/n dans l'étape a) est tel que $1/2 \leq m/n \leq 5$.

Selon un mode d'exécution, l'étape a) est mise en oeuvre en présence d'amorceur de polymérisation radicalaire, et éventuellement en présence d'un limitateur de chaînes.

Les amorceurs radicalaires sont ceux qui sont communément utilisés dans les polymérisations radicalaires des monomères acryliques et qui se décomposent à la chaleur, tels que peroxydes, composés azo, percarbonates et autres.

A titre de composé peroxyde organique, on peut citer : le peroxyde de tert-butyle, le peroxyde de cumyle, le peroxyde de méthyléthylcétone, le perphtalate de tert-butyle, le perbenzoate de tert-butyle, le peracétate de tert-butyle, le 2,5-diméthyl-2,5-di(tert-butylperoxy)-hexane, le peroxyde de tert-amyle, le peroxyde de benzoyle, le peroxyde de lauryle, le perpivalate de tert-butyle.

A titre de composé azo organique, on peut citer : l'azobisisobutanolacétate, le 1,1-azo-bis-cyclohexanecarbonitrile, le 2-phénylazo-2,4-diméthyl-4-méthoxyvaléronitrile, le 2-cyano-2-propylazoformamide, et le 2,2'-azo-bis-isobutyronitrile.

A titre de composé percarbonate qui peut être utilisé, on peut mentionner le percarbonate de ter-butyle.

Ces amorceurs peuvent être utilisés isolément ou en mélange de deux ou de plusieurs d'entre eux. Le choix s'effectue en fonction de la température de polymérisation.

Les agents limitateurs de chaînes habituellement employés sont des mercaptans primaires, secondaires ou tertiaires comportant un groupement alkyle linéaire ou ramifié, non-substitué ou substitué. Des exemples de tels

mercaptans sont, à titre non-limitatif : le n-butylthiol, le sec-butylthiol, le tert-butylthiol, le n-dodécylthiol, le n-octylthiol. Sont aussi appropriés les mercaptans comportant aussi un groupement aromatique, tels que le benzènethiol, le thiocrésol, le 4-tert-butyl-o-thiocrésol. Conviennent aussi d'autres mercaptans tels que l'acide thioglycolique et ses esters, par exemple ceux ayant de 2 à 18 atomes de carbone dans la chaîne alkyle, tel que l'éthylènethioglycol.

Ces amorceurs peuvent être utilisés isolément ou en mélange de deux ou de plusieurs d'entre eux. Les quantités en mercaptans introduites dépendent du poids moléculaire désiré ainsi que de la température de réaction.

Selon un autre mode de réalisation, la polymérisation s'effectue en solution : l'étape a) est mise en oeuvre en présence d'un solvant. Le solvant est tout solvant adéquat et variable selon le taux d'acide, i.e. la fraction de monomère acide, que l'on désire incorporer dans le copolymère. Le mélange des monomères représentent de préférence entre 10 et 50 % de la masse totale du mélange réactionnel.

Le solvant est choisi parmi les solvants à polarité élevée tels que l'acétone, le méthanol, l'acétonitrile, le dioxane, le tétrahydrofuranne, l'acétamide, le diméthylformamide, et autre. Un mélange de solvant est aussi envisagé.

Selon un autre mode de réalisation, la polymérisation s'effectue en milieu précipitant. L'étape a) est mise en oeuvre en présence d'un solvant dans lequel le mélange de monomères est soluble mais pas le polymère. Celui-ci précipite en cours de polymérisation sous forme de grains. Dans ce cas, le solvant ou le mélange de solvants est choisi parmi les solvants à polarité faible tels que l'hexane, le toluène, etc.

Dans la seconde étape, l'étape b), le procédé consiste à ajouter, à une température proche de la température ambiante, une amine primaire directement dans le mélange réactionnel de polymérisation dans les conditions, données ci-avant, permettant d'obtenir le polymère salifié.

De préférence, la salification est mise en oeuvre sous pression atmosphérique. De préférence, elle est mise en oeuvre à une température comprise entre 10 et 30°C, pendant une période comprise entre 15 et 30 mn.

L'amine ajoutée est présente en une quantité au moins stoechiométrique, i.e. l'amine est en excès. De préférence, le rapport molaire [amine primaire/fonction acide du polymère] dans l'étape b) est compris entre 1 et 4.

L'amine ajoutée répond à la formule générale suivante :

$$R_2 - NH_2$$

dans laquelle :

$R_2$ est un atome d'hydrogène, un groupe aliphatique contenant de 1 à 12 atomes de carbone, un groupe cycloaliphatique contenant de 6 à 14 atomes de carbone ou un groupe aryle contenant de 6 à 12 atomes de carbone.

Les groupes peuvent aussi être substitués par des substituants classiques.

Les amines particulièrement préférées sont la méthylamine et la cyclohexylamine. L'amine est ajoutée pure ou diluée dans un solvant polaire et miscible avec le solvant de polymérisation. Selon une forme de réalisation, l'étape b) est mise en oeuvre en présence d'un solvant.

Le copolymère salifié obtenu à l'issue de cette étape peut être purifié par les techniques classiques telles que l'évaporation sous pression réduite à une température comprise entre 20 et 60°C, préférentiellement entre 30 et 50°C, ou telles que la précipitation du copolymère salifié dans un non-solvant et sa filtration.

Le copolymère salifié répond à la formule générale IV.

La troisième étape du procédé de préparation du polymère imidifié peut être réalisée en introduisant le copolymère salifié de formule IV dans un réacteur, avantageusement étanche et muni d'un système d'agitation, et à le chauffer en masse à une température comprise entre 150 et 350°C, préférentiellement entre 150 et 300°C, sous une pression comprise entre 1 et 100 atmosphères, préférentiellement entre 1 et 10 atmosphères, pendant un temps de séjour variable entre 1 mn et 5 heures, préférentiellement entre 5 mn et 5 heures.

Cette étape peut être mise en oeuvre sans solvant ou en présence de solvant.

Selon une variante, la troisième étape peut être effectuée dans une extrudeuse ou un "static mixer". Ainsi, selon une variante, lesdites étapes a), b) et c) sont mises en oeuvre dans un solvant. Dans le cas où le procédé d'imidification est aussi effectué en solution dans un solvant, celui-ci est stable à haute température. Ce solvant est choisi parmi le benzène, le toluène, le xylène, et autres BTX, le cyclohexanol, utilisé seul ou en mélange. Dans ce cas, la réaction d'imidification doit être suivie d'une étape supplémentaire de dévolatilisation sous pression réduite, pour éliminer le solvant et les sous-produits de la réaction.

Selon une alternative, lesdites étapes a) et b) sont mises en oeuvre dans un solvant, et ce dernier solvant est évaporé avant l'étape c), i.e. avant l'étape imidification en masse.

Ce procédé selon la présente invention permet d'obtenir des copolymères glutarimides à résistance thermique améliorée et présentant une Tg élevée, qu'il est facile de contrôler.

Ces copolymères peuvent contenir encore des fonctionnalités acides ou éventuellement anhydrides résiduelles, en quantités comprises entre 1 et 2 méq/g, variables suivant le taux d'imidification. Ces fonctionnalités résultent de la réaction normale de recombinaison des amines sur la chaîne polymère. Il est préférable d'éliminer ces fonctionnalités.

Ainsi, selon une variante d'exécution du présent procédé, ledit procédé comprend une étape supplémentaire consistant en l'étape d) suivante :
d) estérification des fonctions acides ou anhydrides résiduelles présentes dans le polymère obtenu à l'issue de l'étape c) en un polymère glutarimide de formule V :

(V)

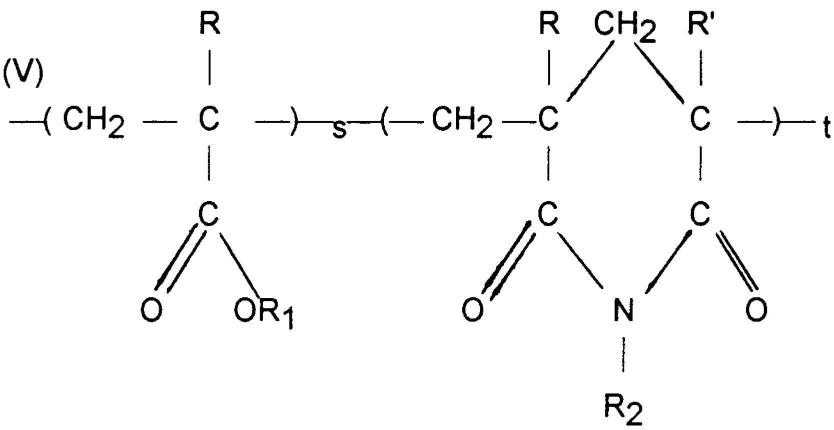

dans laquelle :

R, R', $R_1$ et $R_2$ ont les significations données précédemment ;
s et t sont tels que s + t = 1 et $0{,}01 \le s \le 0{,}99$, $0{,}01 \le t \le 0{,}99$,
à une température comprise entre 50 et 350°C, pendant une période comprise entre 5 mn et 5 heures, sous une pression comprise entre 1 et 40 atm., en présence d'un agent d'estérification, ce dernier étant présent selon un rapport molaire [agent d'estérification/fonctions résiduelles] compris entre 1 et 4.

De préférence, cette étape d) est mise en oeuvre à une température comprise entre 150 et 300°C, pendant une période comprise entre 15 mn et 3 heures, sous une pression comprise entre 1 et 20 atm., et avec un rapport molaire de réactifs compris entre 1 et 2.

Les agents d'estérification qui peuvent être employés sont les agents classiques. A titre d'exemple, on peut citer : les orthoesters, les cétals, les carbonates, les sulfoxydes, les sulfates, les isocyanates et autres. Un agent avantageux est un orthoester.

Cette réaction d'estérification peut être catalysée, par exemple, par des amines tertiaires, des sels d'ammonium ou des acides de Lewis.

On obtient alors des copolymères esters (méth)acryliques-glutarimides possédant une bonne résistance thermique, des Tg en général supérieures à 120°C, qui varient en fonction de la nature de l'amine et du degré de salification du copolymère de départ. Ces matériaux sont non réticulés et présentent de bonnes propriétés de transparence.

La présente invention a également pour objet les produits intermédiaires utiles dans la présente synthèse. Ces produits intermédiaires sont les copolymères salifiés de formule IV :

(IV) 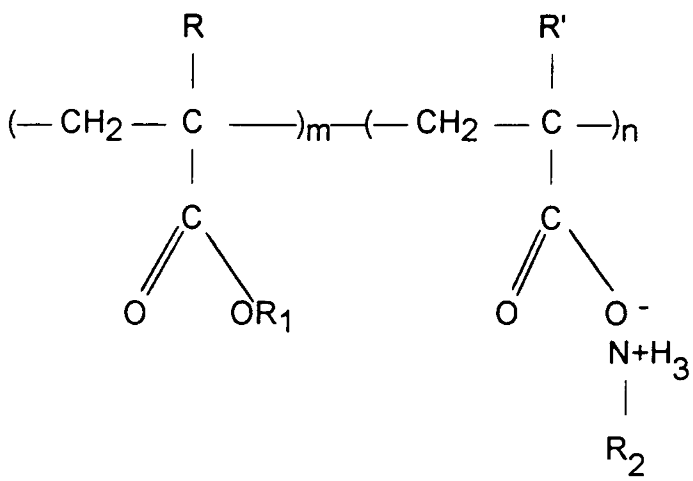

dans laquelle :

- R et R', identiques ou différents, sont H ou $CH_3$ ;
- $R_1$ est un groupe alkyle en $C_{1-8}$ ;
- $R_2$ est H, un groupe alkyle en $C_{1-12}$, cycloalkyle en $C_{6-14}$, aryle en $C_{6-12}$ ;
- m et n sont tels que : m + n = 1 et $1/99 \leq m/n \leq 99$.

Un polymère préféré est le polymère de formule VI :

(VI) 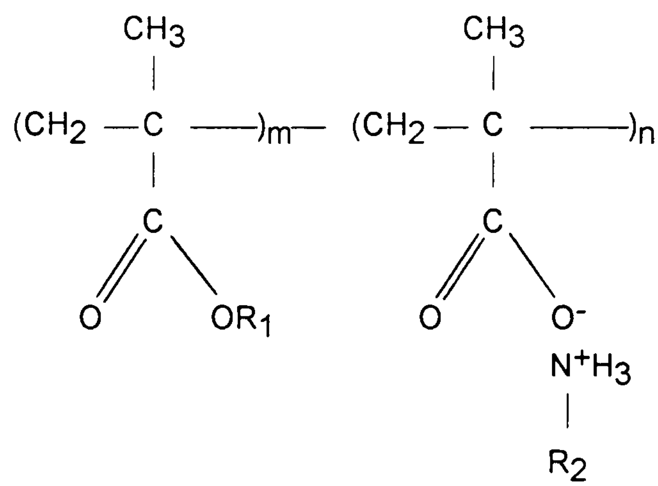

dans laquelle :

$R_1 = CH_3$, $C_2H_5$, $-(CH_2)_2-CH_3$, $-CH(CH_3)_2$, $-(CH_2)_3-CH_3$,

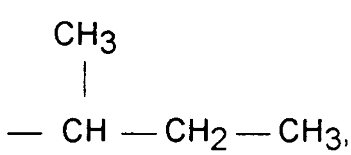

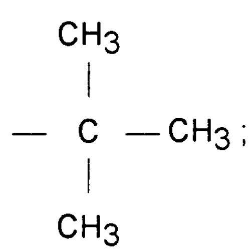

$R_2$ = H, $CH_3$, $C_2H_5$, cyclo$C_6H_{14}$ ;

m et n étant les proportions molaires respectivement en ester (méth)acrylique et en sel d'ammonium de l'acide (méth)acrylique avec :

$$m + n = 1 \text{ et } 1/3 \leq m/n \leq 5$$

De préférence, m et n sont tels que $1/2 \leq m/n \leq 5$. Par ailleurs, on préfère aussi certains substituants. Ainsi, on accorde un intérêt particulier aux polymères salifiés dans lesquels R et R' de la formule IV sont tous deux $CH_3$ ; $R_1$ est un groupe méthyle.

L'amine est de préférence telle que l'on obtienne un des cas de figure ci-après : $R_2$ est un groupe méthyle ou $R_2$ est un groupe cyclohexyle.

Le poids moléculaire moyen en masse de ce polymère est compris entre 10 000 et 300 000, de préférence entre 20 000 et 150 000.

Les exemples suivants illustrent la présente invention. Dans les exemples, "MMA" et "MAA" signifient respectivement "méthacrylate de méthyle" et "acide méthacrylique".

***Exemple 1***

Dans un ballon tricol en verre, muni d'un réfrigérant et d'une arrivée d'azote, on effectue la copolymérisation radicalaire en "batch" (en lots) de 18 g de méthacrylate de méthyle (MMA) (0,18 moles) et de 1,72 g d'acide méthacrylique (MAA) ($2.10^{-2}$ moles) dans 100 ml d'acétone à reflux (T=56°C) pendant 8 heures, sous azote, en présence d'un mélange d'amorceurs composé de $10^{-3}$ moles de 2,2'-azo-bis-isobutyronitrile (AIBN) et de $10^{-3}$ moles de perpivalate de tertiobutyle. Après polymérisation totale, le mélange est refroidi à température ambiante. On ajoute alors, goutte à goutte, directement dans le mélange de polymérisation, 4,65 g d'une solution aqueuse de méthylamine à 40 % ($6.10^{-2}$ moles) préalablement refroidie à O°C. L'addition dure 15 minutes et on laisse réagir pendant 15 autres minutes. On évapore les solvants acétone et eau à l'évaporateur rotatif en chauffant à 50°C. Le copolymère est ensuite séché à 50°C pendant 10 heures dans une étuve ventilée.

On chauffe en masse le copolymère salifié dans un réacteur en verre sous pression, placé dans un autoclave qui est lui-même agité par un système de balancier, à 250°C pendant 3 heures.

Le produit est repris à l'acétone et précipité dans l'éther. Il est filtré et séché dans une étuve ventilée à 50°C.

Pour le dernier traitement d'estérification, le polymère imidifié est placé dans le réacteur précédemment décrit en présence de xylène et d'orthoformiate de triméthyle (TMOF) dans les conditions stoechiométriques [TMOF]/[MAA résiduels] = 2.

Le mélange réactionnel est chauffé à 250°C pendant 3 heures. Après refroidissement, le polymère est précipité et séché en étuve ventilée. On obtient un produit parfaitement transparent.

Les caractéristiques de composition chimique et de tenue thermique avant et après traitement au triméthylorthoformiate sont répertoriées dans le tableau 1.

Les résultats de composition chimique des différents produits ont été déterminés par micro-analyse (% N), dosage colorimétrique des fonctions acides et anhydrides, RMN $^1H$ 250 MHz (réalisé sur un appareil BRUKER WP 250).

Les valeurs de Tg ont été déterminées par analyse thermique différentielle à l'aide d'un appareil PERKIN-ELMERK DSC 4.

***Exemple 2***

Un polymère contenant des maillons glutarimides a été préparé dans les mêmes conditions que dans l'exemple 1, à cette exception près que nous sommes partis d'un mélange initial en monomères composé de 16 g de MMA (0,16 mole) et de 3,44 g de MAA (0,04 mole).

Lors de l'étape de salification, on ajoute goutte à goutte 9,30 g de solution aqueuse de méthylamine à 40 % ($1,2.10^{-1}$ moles). Les résultats d'imidification sont fournis dans le tableau 1. Le produit obtenu est parfaitement transparent.

***Exemple 3***

De la même manière que dans l'exemple 1, 14 g de MMA (0,14 mole) et 5,16 g de MAA (0,06 mole) sont copolymérisés en "batch" mais cette fois-ci dans le méthanol au reflux (T=65°C) en présence d'un mélange d'amorceurs constitué de $1,5.10^{-3}$ moles d'AIBN et de $5.10^{-4}$ moles de perpivalate de tertiobutyle.

La salification après polymérisation s'effectue avec 13,95 g d'une solution aqueuse de méthylamine à 40 % (0,18 mole). Le reste est identique à l'exemple 1. On obtient un produit parfaitement transparent.

*Exemple 4*

De la même manière que dans l'exemple 3, 12 g de MMA (0,12 mole) et 6,88 g de MAA (0,08 mole) sont copolymérisés en "batch" dans le méthanol à reflux, pendant 8 heures.

La salification après polymérisation s'effectue avec 18,6 g d'une solution aqueuse de méthylamine à 40 % (0,24 mole). Le reste est identique à l'exemple 1. Le produit obtenu est parfaitement transparent.

*Exemple 5*

De la même manière que dans l'exemple 3, 10 g de MMA (0,1 mole) et 8,6 g de MAA (0,1 mole) sont copolymérisés en "batch" dans le méthanol à reflux pendant 8 heures.

La salification après polymérisation s'effectue avec 23,25 g d'une solution aqueuse de méthylamine à 40 % (0,3 mole). Le reste est identique à l'exemple 1. Le produit obtenu est parfaitement transparent.

| EXEMPLES | COMPOSITION INITIALE EN MONOMERES (Moles) | | APRES PYROLISE | | | | | | APRES TRAITEMENT D'ESTERIFICATION AU TRIMETHYLORTHOFORMIATE | | | | |
|---|---|---|---|---|---|---|---|---|---|---|---|---|---|
| | MMA | MAA | % N | %acide (méq/g) | Composition (mole) MMA | IMIDE | MAA | TG (°C) | % N | Composition (mole) MMA | IMIDE | MAA | TG (°C) |
| 1 | 90 | 10 | 1.61 | 1,26 | 77 | 11 | 12 | 139,5 | 1,43 | 89 | 11 | 0 | 124 |
| 2 | 80 | 20 | 3,77 | 1,73 | 54 | 26 | 20 | 151,0 | 3,55 | 74 | 26 | 0 | 132 |
| 3 | 70 | 30 | 4,37 | 1,73 | 43 | 36 | 21 | 154,0 | 4,28 | 64 | 36 | 0 | 132 |
| 4 | 60 | 40 | 5,49 | 1,78 | 30 | 47 | 23 | 152,0 | 5,38 | 53 | 47 | 0 | 139 |
| 5 | 50 | 50 | 6,74 | 1,20 | 17 | 66 | 17 | 165,5 | 6,73 | 34 | 66 | 0 | 150 |

**Revendications**

1. Procédé de préparation de copolymères (méth)acryliques glutarimides de formule I :

(I) 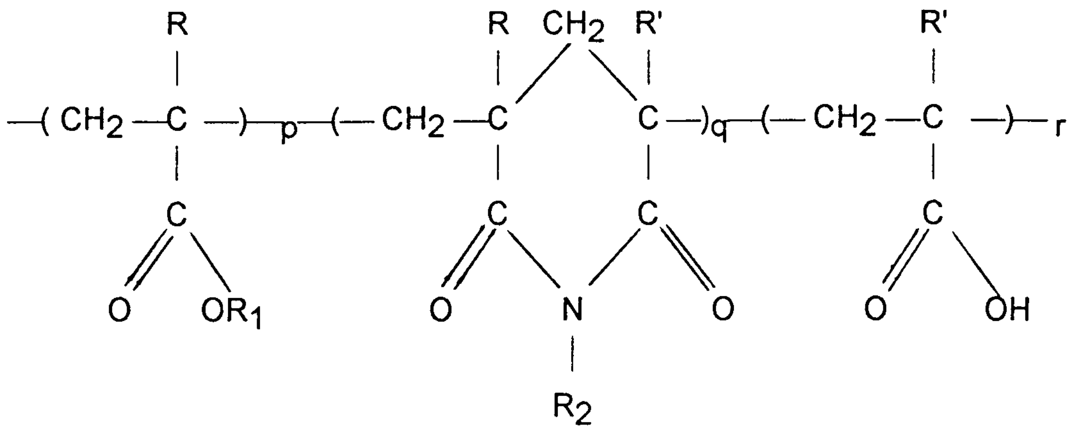

dans laquelle :

R et R', identiques ou différents, sont H ou $CH_3$ ;
$R_1$ est un groupe alkyle en $C_{1-8}$ ;
$R_2$ est H, un groupe alkyle en $C_{1-12}$, cycloalkyle en $C_{6-14}$, aryle en $C_{6-12}$ ;
p, q, r sont tels que $1 \leq p \leq 99$, $1 \leq q \leq 99$ et $0 \leq r \leq 30$ pour $p + q + r = 100$

caractérisé en ce qu'il comprend les étapes de :

a) polymérisation de monomères de formules respectives :

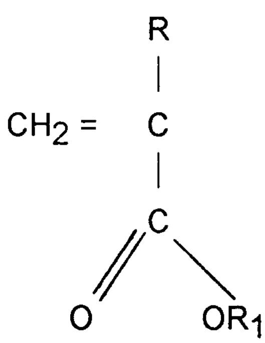 (IIa) et 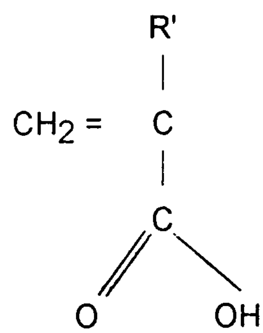 (IIb)

en un polymère de formule III :

(III) 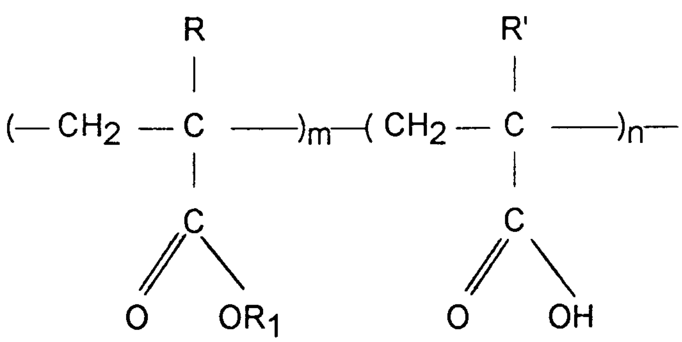

dans laquelle :

R, R' et $R_1$ ont les significations ci-dessus ;
m et n sont tels que :
$m + n = 1$ et $1/99 \leq m/n \leq 99$ ;

à une température comprise entre 30 et 140°C, pendant une période de 1 à 20 heures, jusqu'à un degré d'avancement de polymérisation d'au moins 90 %.

b) salification du polymère obtenu à l'étape précédente, avec au moins la quantité stoechiométrique d'une amine primaire de formule :

$$R_2 - NH_2$$

dans laquelle :

$R_2$ a la signification ci-dessus ;
en un polymère salifié de formule IV :

(IV) 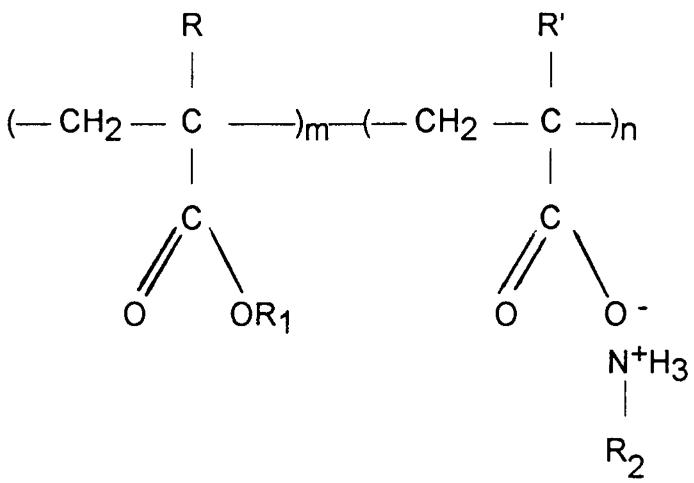

dans laquelle les symboles ont la même signification que ci-dessus ;
à une température comprise entre 0 et 40°C, pendant une période de 1 mn à 1 heure ;

c) imidification du polymère salifié obtenu à l'étape b) en le polymère de formule I précitée, à une température comprise entre 150 et 350°C, pendant une période de 1 mn à 5 heures, sous une pression comprise entre 1 et 100 atm.

**2.** Procédé selon la revendication 1, caractérisé en ce que l'étape a) est mise en oeuvre sous pression atmosphérique.

**3.** Procédé selon la revendication 1 ou 2, caractérisé en ce que l'étape a) est mise en oeuvre à une température comprise entre 30 et 70°C, pendant une période de 1 à 10 heures.

**4.** Procédé selon l'une quelconque des revendications 1 à 3, caractérisé en ce que l'étape a) est mise en oeuvre en présence d 'amorceur de polymérisation radicalaire.

**5.** Procédé selon la revendication 4, caractérisé en ce que l'étape a) est mise en oeuvre en présence d'un limitateur de chaînes.

**6.** Procédé selon l'une quelconque des revendications 1 à 5, caractérisé en ce que le rapport m/n dans l'étape a) est tel que $1/2 \leq m/n \leq 5$.

**7.** Procédé selon l'une quelconque des revendications 1 à 6, caractérisé en ce que l'étape b) est mise en oeuvre sous pression atmosphérique.

**8.** Procédé selon l'une quelconque des revendications 1 à 7, caractérisé en ce que l'étape b) est mise en oeuvre à une température comprise entre 10 et 30°C, pendant une période comprise entre 15 et 30 mn.

**9.** Procédé selon l'une quelconque des revendications 1 à 8, caractérisé en ce que le rapport molaire [amine primaire/fonction acide du polymère] dans l'étape b) est compris entre 1 et 4.

**10.** Procédé selon l'une quelconque des revendications 1 à 9, caractérisé en ce que l'étape c) est mise en oeuvre à une température comprise entre 150 et 300°C, pendant une période comprise entre 5 mn et 5 heures.

**11.** Procédé selon l'une quelconque des revendications 1 à 10, caractérisé en ce que lesdites étapes a), b), et c), sont mises en oeuvre dans un solvant.

**12.** Procédé selon l'une quelconque des revendications 1 à 10, caractérisé en ce que lesdites étapes a) et b) sont mises en oeuvre dans un solvant, et en ce que ce dernier solvant est évaporé avant l'étape c).

**13.** Procédé selon l'une des revendications 1 à 12, caractérisé en ce que l'étape c) est mise en oeuvre dans un réacteur, une extrudeuse ou un "static mixer".

**14.** Procédé selon l'une quelconque des revendications 1 à 13, caractérisé en ce que la polymérisation s'effectue en milieu précipitant.

**15.** Procédé selon l'une quelconque des revendications 1 à 14, caractérisé en ce que ledit procédé comprend une étape supplémentaire consistant en l'étape d) suivante :

d) estérification des fonctions acides ou anhydrides résiduelles présentes dans le polymère obtenu à l'issue de l'étape c) en un polymère glutarimide de formule V :

(V)

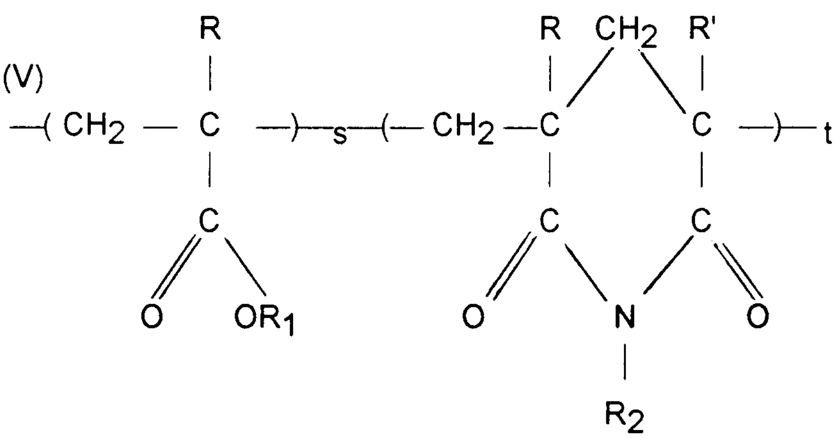

dans laquelle :

R, R', $R_1$ et $R_2$ ont les significations données dans la revendication 1 ;
s et t sont tels que s + t = 1 et 0,01 ≤ s ≤ 0,99, 0,01 ≤ t ≤ 0,99,
à une température comprise entre 50 et 350°C, pendant une période comprise entre 5 mn et 5 heures, sous une pression comprise entre 1 et 40 atm., en présence d'un agent d'estérification, ce dernier étant présent selon un rapport molaire (agent d'estérifcation/fonctions résiduelles] compris entre 1 et 4.

**16.** Procédé selon la revendication 15, caractérisé en ce que l'étape d) est mise en oeuvre à une température comprise entre 150 et 300°C, pendant une période comprise entre 15 mn et 3 heures, sous une pression comprise entre 1 et 20 atm., et avec un rapport molaire de réactifs compris entre 1 et 2.

**17.** Procédé selon la revendication 15 ou 16, caractérisé en ce que l'étape d) est catalysée.

**18.** Polymère salifié caractérisé en ce qu'il répond à la formule IV :

(IV) 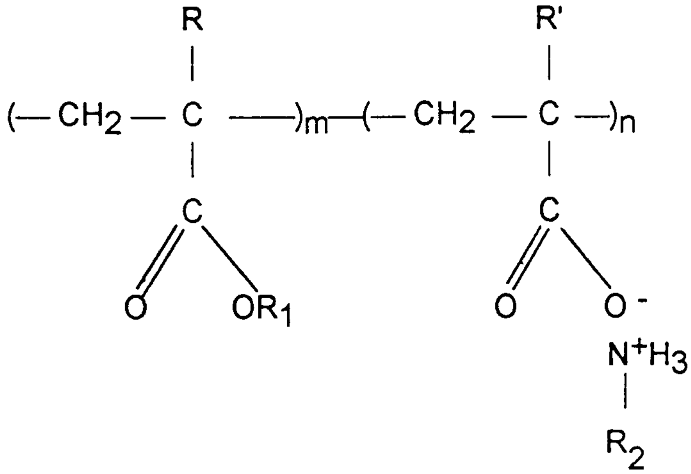

dans laquelle :

R et R', identiques ou différents, sont H ou $CH_3$ ;
$R_1$ est un groupe alkyle en $C_{1-8}$ ;
$R_2$ est H, un groupe alkyle en $C_{1-12}$, cycloalkyle en $C_{6-14}$, aryle en $C_{6-12}$ ;
m et n sont tels que : m + n = 1 et $1/99 \leq m/n \leq 99$.

**19.** Polymère salifié conforme à la revendication 18, caractérisé en ce qu'il répond à la formule VI :

(VI) 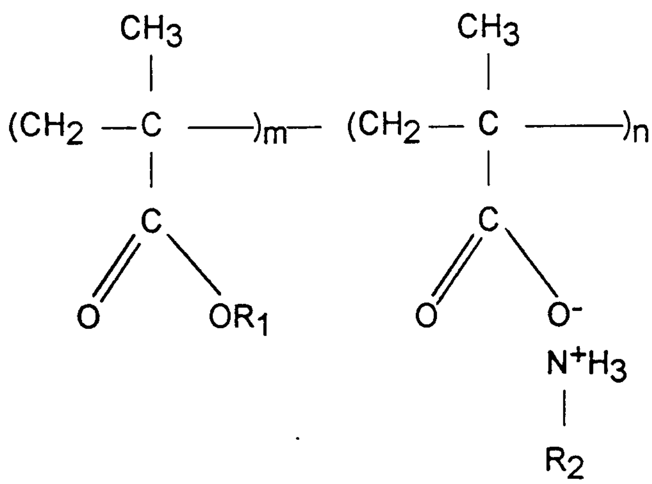

dans laquelle :

$R_1$ = $CH_3$, $C_2H_5$, $-(CH_2)_2-CH_3$, $-CH(CH_3)_2$, $-(CH_2)_3-CH_3$,

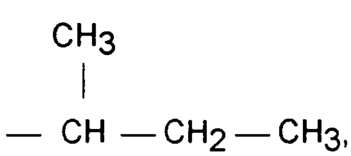

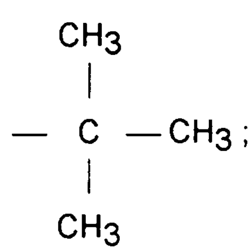

$R_2$ = H, $CH_3$, $C_2H_5$, cyclo$C_6H_{14}$ ;

m et n sont tels que : $m + n = 1$ et $1/3 \leq m/n \leq 5$.

**20.** Polymère selon l'une quelconque des revendications 18 à 19, caractérisé en ce que son poids moléculaire moyen en masse est compris entre 10 000 et 300 000.

## Claims

**1.** Process for the preparation of (meth)acrylic glutarimide copolymers of formula I:

(I) 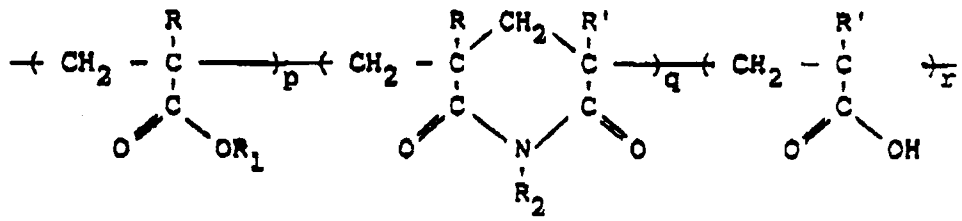

in which:

R and R', which may be identical or different, are H or $CH_3$;
$R_1$ is a $C_{1-8}$ alkyl group;
$R_2$ is H, a $C_{1-12}$ alkyl group, a $C_{6-14}$ cycloalkyl group or a $C_{6-12}$ aryl group;
p, q and r are such that $1 \leq p \leq 99$, $1 \leq q \leq 99$ and $0 \leq r \leq 30$, with $p + q + r = 100$,

characterized in that it comprises the stages of:

a) polymerization of monomers of respective formulae:

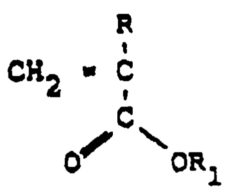 (IIa) and

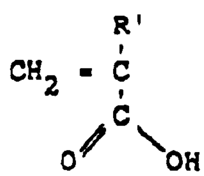 (IIb)

to a polymer of formula III:

(III) 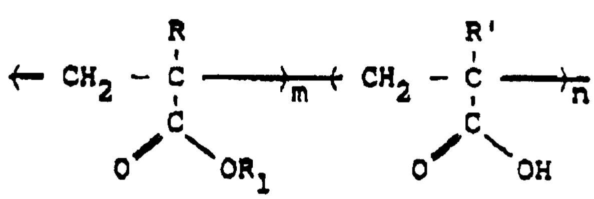

in which:

R, R' and $R_1$ have the above meanings and m and n are such that:
$m + n = 1$ and $1/99 \leq m/n \leq 99$,
at a temperature of between 30 and 140°C, for a period of 1 to 20 hours, until the polymerization has advanced to a degree of at least 90 %,

b) salification of the polymer obtained in the preceding stage, with at least the stoichiometric amount of a primary amine of formula:

$R_2 - NH_2$

in which:

$R_2$ has the above meaning
to a salified polymer of formula IV:

(IV) 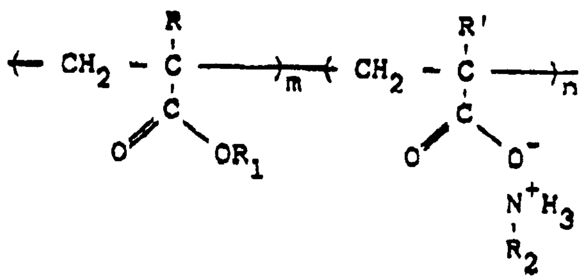

in which the symbols have the same meaning as above,
at a temperature of between 0 and 40°C, for a period of 1 min to 1 hour, and

c) imidification of the salified polymer obtained in stage b) to the polymer of the abovementioned formula I, at a temperature of between 150 and 350°C, for a period of 1 min to 5 hours, under a pressure of between 1 and 100 atm.

2. Process according to Claim 1, characterized in that stage a) is carried out under atmospheric pressure.

3. Process according to Claim 1 or 2, characterized in that stage a) is carried out at a temperature of between 30 and 70°C for a period of 1 to 10 hours.

4. Process according to any one of Claims 1 to 3, characterized in that stage a) is carried out in the presence of a radical polymerization initiator.

5. Process according to Claim 4, characterized in that stage a) is carried out in the presence of a chain stopper.

6. Process according to any one of Claims 1 to 5, characterized in that the ratio m/n in stage a) is such that $1/2 \leq m/n \leq 5$.

7. Process according to any one of Claims 1 to 6, characterized in that stage b) is carried out under atmospheric pressure.

8. Process according to any one of Claims 1 to 7, characterized in that stage b) is carried out at a temperature of between 10 and 30°C for a period of between 15 and 30 min.

9. Process according to any one of Claims 1 to 8, characterized in that the molar ratio [primary amine/acid functional group of the polymer] in stage b) is between 1 and 4.

10. Process according to any one of Claims 1 to 9, characterized in that stage c) is carried out at a temperature of between 150 and 300°C for a period of between 5 min and 5 hours.

11. Process according to any one of Claims 1 to 10, characterized in that the said stages a), b) and c) are carried out in a solvent.

12. Process according to any one of Claims 1 to 10, characterized in that the said stages a) and b) are carried out in a solvent and in that this latter solvent is evaporated before stage c).

13. Process according to one of Claims 1 to 12, characterized in that stage c) is carried out in a reactor, an extruder or a static mixer.

14. Process according to any one of Claims 1 to 13, characterized in that the polymerization is carried out in a precipitating medium.

**15.** Process according to any one of Claims 1 to 14, characterized in that the said process comprises a supplementary stage consisting of the following stage d):

d) esterification of the residual acid or anhydride functional groups present in the polymer obtained at the end of stage c), to a glutarimide polymer of formula V:

(V) 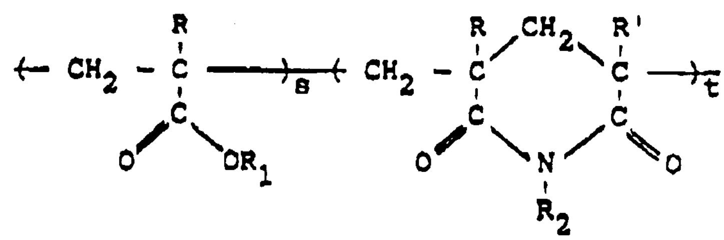

in which:

R, R', $R_1$ and $R_2$ have the meanings given in Claim 1 and
s and t are such that $s + t = 1$ and $0.01 \leq s \leq 0.99$ and $0.01 \leq t \leq 0.99$,

at a temperature of between 50 and 350°C, for a period of between 5 min and 5 hours, under a pressure of between 1 and 40 atm, in the presence of an esterification agent, the latter being present in a molar ratio [esterification agent/residual functional groups] of between 1 and 4.

**16.** Process according to Claim 15, characterized in that stage d) is carried out at a temperature of between 150 and 300°C for a period of between 15 min and 3 hours under a pressure of between 1 and 20 atm and with a molar ratio of reactants of between 1 and 2.

**17.** Process according to Claim 15 or 16, characterized in that stage d) is catalysed.

**18.** Salified polymer, characterized in that it corresponds to formula IV:

(IV) 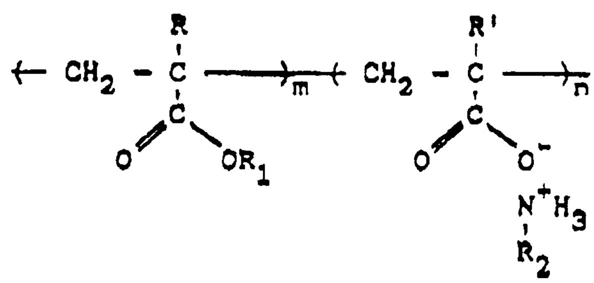

in which:

R and R', which are identical or different, are H or $CH_3$,
$R_1$ is a $C_1$-$C_8$ alkyl group,
$R_2$ is H, a $C_1$-$C_{12}$ alkyl group, a $C_6$-$C_{14}$ cycloalkyl group or a $C_6$-$C_{12}$ aryl group and
m and n are such that $m + n = 1$ and $1/99 \leq m/n \leq 99$.

**19.** Salified polymer in accordance with Claim 18, characterized in that it corresponds to formula VI:

(VI) 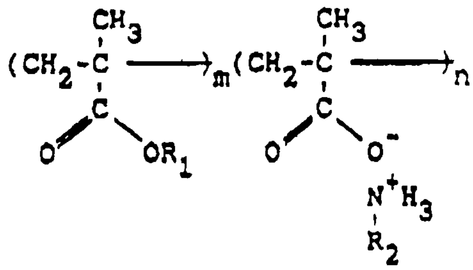

in which:

$R_1 = CH_3, C_2H_5, -(CH_2)_2-CH_3, -CH(CH_3)_2, -(CH_2)_3-CH_3,$

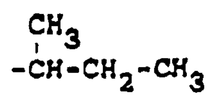 or 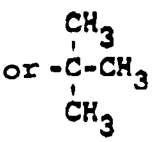 ;

$R_2 = H, CH_3, C_2H_5$, or cyclo $C_6H_{14}$; and
m and n are such that: $m + n = 1$ and $1/3 \leq m/n \leq 5$.

**20.** Polymer according to either of Claims 18 and 19, characterized in that its mass-average molecular weight is between 10 000 and 300 000.

**Patentansprüche**

**1.** Verfahren zur Herstellung von (Meth-)Acryl/Glutarimid-Copolymeren der Formel I

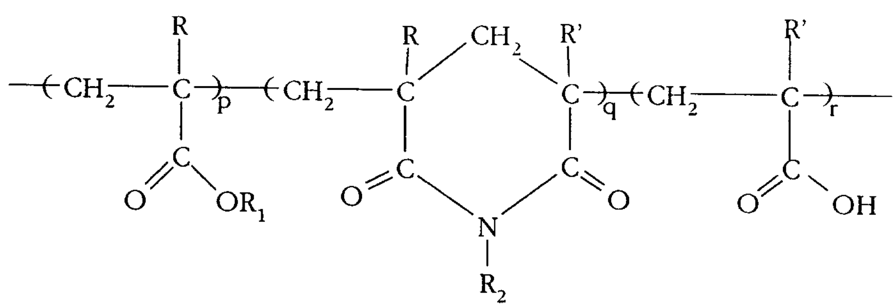 (I)

in der:

- R und R', identisch oder verschieden, H oder $CH_3$ sind;
- $R_1$ eine $C_{1-8}$-Alkylgruppe darstellt;
- $R_2$ H, eine $C_{1-12}$-Alkylgruppe, eine $C_{6-14}$-Cycloalkylgruppe, eine $C_{6-12}$-Arylgruppe bedeutet;
- p, q, r so gewählt sind, daß gilt: $1 \leq p \leq 99$; $1 \leq q \leq 99$ und $0 \leq r \leq 30$ mit $p + q + r = 100$,

dadurch gekennzeichnet, daß das Verfahren die folgenden Verfahrensschritte umfaßt:

a) Polymerisation von Monomeren der jeweiligen Formeln

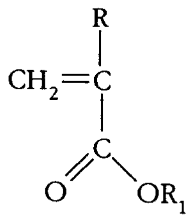 (IIa)

und

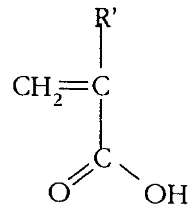 (IIb)

zu einem Polymer der Formel III

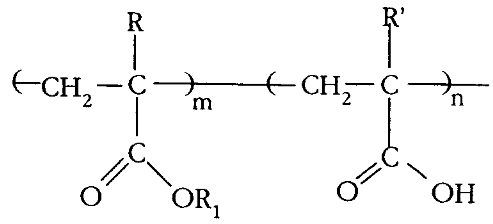 (III)

in der:

- R, R' und $R_1$ dieselbe Bedeutung wie oben haben;
- m und n so gewählt sind, daß gilt: $m + n = 1$ und $1/99 \leq m/n \leq 99$; bei einer Temperatur zwischen 30 und 140 °C während einer Dauer von 1 bis 20 Stunden bis zu einem Grad des Fortschreitens der Polymerisation von mindestens 90 %;

b) Versalzung des in dem vorhergehenden Verfahrensschritt erhaltenen Polymers mit mindestens der stöchiometrischen Menge eines primären Amins der Formel

$$R_2 - NH_2$$

in der:

$R_2$ dieselbe Bedeutung wie oben hat;
zu einem versalzten Polymer der Formel IV

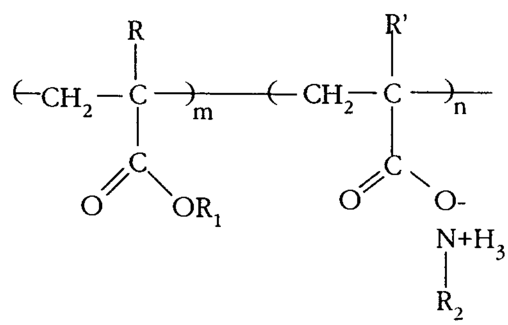 (IV)

in der die Symbole dieselbe Bedeutung wie oben haben; bei einer Temperatur zwischen 0 und 40°C während einer Dauer von 1 Minute bis 1 Stunde;

c) Imidifizierung (Imidbildung) des in Schritt b) erhaltenen versalzten Polymers zu dem Polymer der zuvor genannten Formel I bei einer Temperatur zwischen 150 und 350 °C während einer Dauer von 1 Minute bis 5 Stunden unter einem Druck zwischen 1 und 100 atm.

**2.** Verfahren nach Anspruch 1, dadurch gekennzeichnet, daß Schritt a) unter Atmosphärendruck durchgeführt wird.

3. Verfahren nach Anspruch 1 oder 2, dadurch gekennzeichnet, daß Schritt a) bei einer Temperatur zwischen 30 und 70 °C während einer Dauer von 1 bis 10 Stunden durchgeführt wird.

4. Verfahren nach einem der Ansprüche 1 bis 3, dadurch gekennzeichnet, daß der Schritt a) in Gegenwart eines radikalischen Polymerisationsstarters durchgeführt wird.

5. Verfahren nach Anspruch 4, dadurch gekennzeichnet, daß Schritt a) in Gegenwart eines Kettenbegrenzungsreagenzes durchgeführt wird.

6. Verfahren nach einem der Ansprüche 1 bis 5, dadurch gekennzeichnet, daß das Verhältnis von m/n in Schritt a) so gewählt ist, daß gilt: $1/2 \leq m/n \leq 5$.

7. Verfahren nach einem der Ansprüche 1 bis 6, dadurch gekennzeichnet, daß Schritt b) unter Atmosphärendruck durchgeführt wird.

8. Verfahren nach einem der Ansprüche 1 bis 7, dadurch gekennzeichnet, daß Schritt b) bei einer Temperatur zwischen 10 und 30 °C während einer Dauer zwischen 15 und 30 Minuten durchgeführt wird.

9. Verfahren nach einem der Ansprüche 1 bis 8, dadurch gekennzeichnet, daß das Molverhältnis von primärem Amin zur Säurefunktion des Polymers in Schritt b) zwischen 1 und 4 liegt.

10. Verfahren nach einem der Ansprüche 1 bis 9, dadurch gekennzeichnet, daß Schritt c) bei einer Temperatur zwischen 150 und 300 °C während einer Dauer zwischen 5 Minuten und 5 Stunden durchgeführt wird.

11. Verfahren nach einem der Ansprüche 1 bis 10, dadurch gekennzeichnet, daß die Schritte a), b) und c) in einem Lösemittel durchgeführt werden.

12. Verfahren nach einem der Ansprüche 1 bis 10, dadurch gekennzeichnet, daß die Schritte a) und b) in Gegenwart eines Lösemittels durchgeführt werden und dieses Lösemittel vor Schritt c) verdampft wird.

13. Verfahren nach einem der Ansprüche 1 bis 12, dadurch gekennzeichnet, daß Schritt c) in einem Reaktor, einem Extruder oder einem „statischen Mixer" durchgeführt wird.

14. Verfahren nach einem der Ansprüche 1 bis 13, dadurch gekennzeichnet, daß die Polymerisation in einem Fällungsmilieu durchgeführt wird.

15. Verfahren nach einem der Ansprüche 1 bis 14, dadurch gekennzeichnet, daß das Verfahren einen zusätzlichen Schritt umfaßt, der aus dem folgenden Arbeitsschritt d) besteht:

d) Veresterung der verbleibenden Säure- oder Anhydridfunktionen in dem Polymer, das aus Schritt c) erhalten wird, zu einem Glutarimidpolymer der Formel V

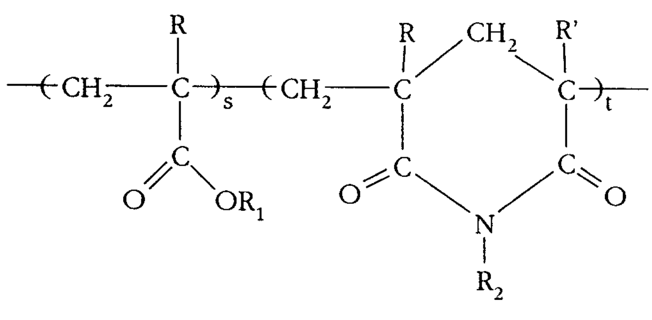

(V)

in der

- R, R', $R_1$ und $R_2$ dieselben Bedeutungen wie in Anspruch 1 haben;
- s und t so gewählt sind, daß gilt: $s + t = 1$ und $0{,}01 \leq s \leq 0{,}99$; $0{,}01 \leq t \leq 0{,}99$;

bei einer Temperatur zwischen 50 und 350 °C für eine Dauer zwischen 5 Minuten und 5 Stunden unter einem Druck zwischen 1 und 40 atm in Gegenwart eines Veresterungsreagenzes, wobei dieses Reagenz in einem Molverhältnis von Veresterungsreagenz zu verbleibenden Funktionen zwischen 1 und 4 vorliegt.

**16.** Verfahren nach Anspruch 15, dadurch gekennzeichnet, daß Schritt d) bei einer Temperatur zwischen 150 und 300 °C während einer Dauer zwischen 15 Minuten und 3 Stunden unter einem Druck zwischen 1 und 20 atm und mit einem Molverhältnis der Reagenzien zwischen 1 und 2 durchgeführt wird.

**17.** Verfahren nach Anspruch 15 oder 16, dadurch gekennzeichnet, daß Schritt d) katalysiert wird.

**18.** Versalztes Polymer, dadurch gekennzeichnet, daß es der Formel IV entspricht

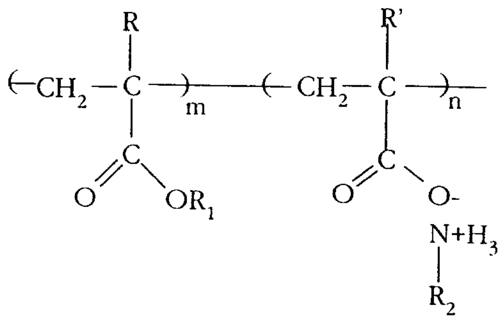

(IV)

in der:

- R und R', identisch oder verschieden, H oder $CH_3$ darstellen;
- $R_1$ eine $C_{1\text{-}8}$-Alkylgruppe ist;
- $R_2$ H, eine $C_{1\text{-}12}$-Alkylgruppe, eine $C_{6\text{-}14}$-Cycloalkylgruppe, eine $C_{6\text{-}12}$-Arylgruppe darstellt;
- m und n so gewählt werden, daß gilt: $m + n = 1$ und $1/99 \leq m/n \leq 99$.

**19.** Versalztes Polymer nach Anspruch 18, dadurch gekennzeichnet, daß es der Formel VI entspricht

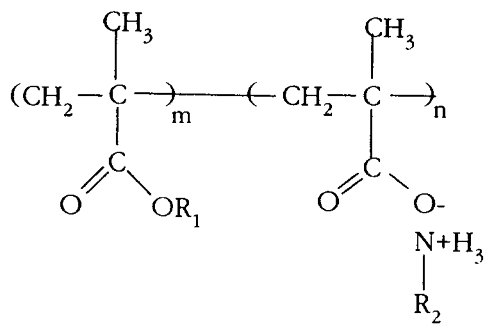

(VI)

in der

- $R_1 = CH_3$, $C_2H_5$, $-(CH_2)_2-CH_3$, $-CH(CH_3)_2$, $-(CH_2)_3-CH_3$,

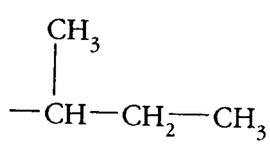,
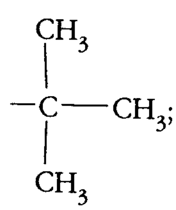

;

- $R_2 = H$, $CH_3$, $C_2H_5$, Cyclo-$C_6H_{14}$;

- m und n so gewählt sind, daß gilt: $m + n = 1$ und $1/3 \leq m/n \leq 5$.

**20.** Polymer nach einem der Ansprüche 18 oder 19, dadurch gekennzeichnet, daß sein massenmittleres Molekulargewicht zwischen 10.000 und 300.000 beträgt.